# EUROPEAN PATENT APPLICATION

(11) **EP 4 116 194 A1**
(43) Date of publication of application: **11.01.2023**
(21) Application number: 22183933.5
(22) Date of filing: 08.07.2022
(51) Int. Cl.: B64D 11/06

(54) **PASSENGER SEATING POSITIONED PROXIMATE TO AN AIRCRAFT INTERIOR STRUCTURE**

(30) Priority: 08.07.2021 US 202117370732
(71) Applicant: B/E Aerospace, Inc., Winston-Salem, NC 27105 (US)
(72) Inventor: DOWTY, Mark B., Rural Hall, 27045 (US)
(74) Representative: Dehns

(57) **Abstract**

Passenger seating (104) positioned proximate to an aircraft interior structure (102) includes at least one seat base assembly (202) and at least one seatback assembly (204). The at least one seat base assembly includes a seat pan (108), and is attached to a floor of an aircraft cabin. The at least one seatback assembly includes a support structure (210) and a seatback (206) couplable to the support structure. The seatback includes a surface contoured to a passenger profile. The support structure is couplable to the aircraft interior structure attached to the floor of the aircraft cabin via at least one quick-release mounting assembly (214), with components of the at least one quick-release mounting assembly being coupled to the support structure and the aircraft interior structure. The at least one seatback assembly is not directly coupled to the at least one seat base assembly.

## Description

### BACKGROUND

High-density aircraft cabin configurations need to address competing interests for space between aircraft cabin components such as increased passenger seating, aircraft interior structures, lavatories, storage spaces, galley spaces, or the like. The balancing of interests for space must take into consideration the aircraft cabin components being required to meet aircraft guidelines and/or standards when installed within the aircraft cabin.

### SUMMARY

Passenger seating positioned proximate to an aircraft interior structure is disclosed, in accordance with one or more embodiments of the present disclosure. The passenger seating may include at least one seat base assembly. The at least one seat base assembly may include a seat pan. The at least one seat base assembly may be attached to a floor of an aircraft cabin. The passenger seating may include at least one seatback assembly. The at least one seatback assembly may include a seatback. The seatback may include a surface contoured to a passenger profile. The at least one seatback assembly may include a support structure. The seatback may be couplable to the support structure. The support structure may be couplable to the aircraft interior structure attached to the floor of the aircraft cabin. The support structure may be couplable to the aircraft interior structure via at least one quick-release mounting assembly. A first component of the at least one quick-release mounting assembly may be coupled to the support structure and a second component of the at least one quick-release mounting assembly may be coupled to the aircraft interior structure. The at least one seatback assembly may not be directly coupled to the at least one seat base assembly.

In some embodiments, the seatback may be couplable to the support structure via at least a second quick-release mounting assembly. A first component of the at least a second quick-release mounting assembly may be coupled to the seatback and a second component of the at least a second quick-release mounting assembly may be coupled to the support structure.

In some embodiments, the support structure may be a hollow rigid structure fabricated from one or more components.

In some embodiments, the support structure may be fabricated from a solid block material.

In some embodiments, the at least one seatback assembly may include a head rest integrated into a contoured profile of the seatback.

In some embodiments, the at least one seatback assembly may include a head rest couplable to the seatback.

In some embodiments, the passenger seating may include at least two spreaders. The seat pan may be coupled to the at least two spreaders. The passenger seating may include at least one structural beam. The at least two spreaders may be coupled to the at least one structural beam. The passenger seating may include at least two legs. The at least one structural beam may be coupled to the at least two legs. The at least two legs may be attached to the floor of the aircraft cabin.

In some embodiments, the at least one seat base assembly and the at least one seatback assembly each may be dimensioned with a width less than a width between the at least two spreaders.

In some embodiments, the at least one seat base assembly may include at least two seat base assemblies. The at least one quick-release mounting assembly may include at least two quick-release mounting assemblies. The at least two seat base assemblies may be separately coupled to the aircraft interior structure via a respective quick-release mounting assembly of the at least two quick-release mounting assemblies. The at least one seatback assembly may include at least two seatback assemblies. The at least two spreaders may include at least three spreaders.

In some embodiments, a first seat base assembly of the at least two seat base assemblies and a first seatback assembly of the at least two seatback assemblies may each be dimensioned with a width less than a width between a first spreader and a second spreader adjacent to the first spreader of the at least three spreaders.

In some embodiments, a second seat base assembly of the at least two seat base assemblies and a second seatback assembly of the at least two seatback assemblies may each be dimensioned with a width less than a width between the second spreader and a third spreader adjacent to the second spreader of the at least three spreaders.

In some embodiments, the passenger seating may include at least two armrests. An armrest of the at least two armrests may each be coupled to each of the at least two spreaders. The at least one seatback assembly may be dimensioned with a width less than a width between the at least two armrests.

In some embodiments, the at least one seatback assembly may be coupled to the aircraft interior structure prior to the at least one seat base assembly being attached to the floor of the aircraft cabin during installation of the passenger seating into the aircraft cabin.

In some embodiments, the at least one seatback assembly may be swappable with at least a second seatback assembly without uncoupling the at least one seat base assembly from the floor of the aircraft cabin.

A system installable within an aircraft cabin is disclosed, in accordance with one or more embodiments of the present disclosure. The system may include an aircraft interior structure. The system may include passenger seating positioned proximate to the aircraft interior structure. The passenger seating may include at least one seat base assembly. The at least one seat base assembly may include a seat pan. The at least one seat base assembly may be attached to a floor of an aircraft cabin. The passenger seating may include at least one seatback assembly. The at least one seatback assembly may include a seatback. The seatback may include a surface contoured to a passenger profile. The at least one seatback assembly may include a support structure. The seatback may be couplable to the support structure. The support structure may be couplable to the aircraft interior structure attached to the floor of the aircraft cabin. The support structure may be couplable to the aircraft interior structure via at least one quick-release mounting assembly. A first component of the at least one quick-release mounting assembly may be coupled to the support structure and a second component of the at least one quick-release mounting assembly may be coupled to the aircraft interior structure. The at least one seatback assembly may not be directly coupled to the at least one seat base assembly.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A illustrates a plan view of passenger seating and an aircraft interior structure, in accordance with one or more embodiments of the present disclosure;
FIG. 1B illustrates a side view of passenger seating and an aircraft interior structure, in accordance with one or more embodiments of the present disclosure;
FIG. 1C illustrates a side view of passenger seating and an aircraft interior structure, in accordance with one or more embodiments of the present disclosure;
FIG. 2A illustrates a side view of passenger seating positioned proximate to an aircraft interior structure, in accordance with one or more embodiments of the present disclosure;
FIG. 2B illustrates a side view of portions of passenger seating positioned proximate to an aircraft interior structure, in accordance with one or more embodiments of the present disclosure;
FIG. 2C illustrates a side view of portions of passenger seating positioned proximate to an aircraft interior structure, in accordance with one or more embodiments of the present disclosure;
FIG. 2D illustrates a side view of portions of passenger seating positioned proximate to an aircraft interior structure, in accordance with one or more embodiments of the present disclosure;
FIG. 3A illustrates a perspective view of portions of passenger seating positioned proximate to an aircraft interior structure, in accordance with one or more embodiments of the present disclosure;
FIG. 3B illustrates a perspective view of portions of passenger seating positioned proximate to an aircraft interior structure, in accordance with one or more embodiments of the present disclosure; and
FIG. 3C illustrates a perspective view of passenger seating positioned proximate to an aircraft interior structure, in accordance with one or more embodiments of the present disclosure.

### DETAILED DESCRIPTION OF THE INVENTION

Reference will now be made in detail to the subject matter disclosed, which is illustrated in the accompanying drawings.

Before explaining one or more embodiments of the present disclosure in detail, it is to be understood the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the present disclosure. However, it will be apparent to one of ordinary skill in the art having the benefit of the instant disclosure the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of or sub-combination of two or more such features, along with any other features which may not necessarily be expressly described or inherently present in the instant disclosure.

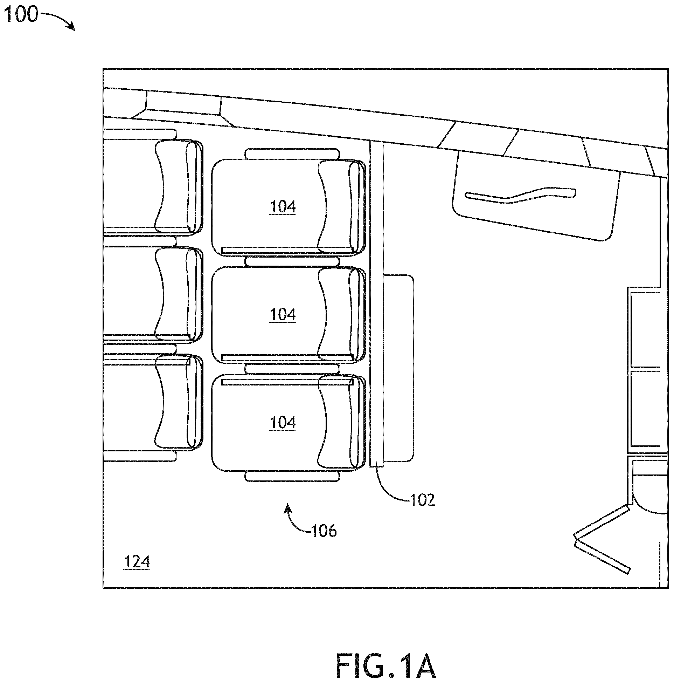

FIGS. 1A-3C generally illustrate passenger seating positioned proximate to an aircraft interior structure, in accordance with one or more embodiments of the present disclosure.

High-density aircraft cabin configurations need to address competing interests for space between aircraft cabin components such as increased passenger seating, aircraft interior structures, lavatories, storage spaces, galley spaces, or the like. Referring now to FIGS. 1A-1C, a known high-density aircraft cabin configuration is illustrated, in accordance with one or more embodiments of the present disclosure.

In some embodiments, an aircraft cabin 100 includes an aircraft interior structure 102. For example, the aircraft interior structure 102 may include, but is not limited to, a monument or partition.

In some embodiments, an aircraft cabin 100 includes one or more passenger seats 104 (e.g., passenger seating). At least some of the one or more passenger seats 104 may be coupled together in a row 106 of the one or more passenger seats 104, and may be positioned within the aircraft cabin 100 near the aircraft interior structure 102. For example, where the aircraft interior structure 102 is positioned in the rear of the aircraft cabin 100, the row 106 of the one or more passenger seats 104 may be an aft row or final row of the one or more passenger seats 104 positioned proximate to the aircraft interior structure 102. By way of another example, where the aircraft interior structure 102 is positioned midway within the aircraft cabin 100 (e.g., such that the aircraft interior structure 102 separates cabin sections, in one non-limiting configuration), the row 106 of the one or more passenger seats 104 may be positioned in a forward section proximate to the aircraft interior structure 102. It is noted herein the terms "passenger seats" and "aircraft seats" may be considered equivalent, for purposes of the present disclosure.

In some embodiments, the one or more passenger seats 104 include one or more seat pans 108 and one or more seatbacks 110. The one or more passenger seats 104 may include a head rest 112. For example, the head rest 112 may be couplable to the seatback 110. By way of another example, the head rest 112 may be integrated into the seatback 110.

In some embodiments, one or more additional components are coupled to and/or integrated into the one or more passenger seats 104. For example, the additional components may include, but are not limited to, fixed armrests 114, pivoting armrests 114 configured to rotate between a stowed position and a deployed position about an axis through a hinge, or seatbelts.

By way of another example, the additional components may include, but are not limited to, diaphragms (e.g., a seat pan diaphragm and/or a seatback diaphragm). For instance, the diaphragms may include, but are not limited to, a plastic diaphragm, a metal diaphragm, a wire or wireframe diaphragm, or the like.

By way of another example, the additional components may include, but are not limited to, cushions (e.g., a seat pan cushion and/or a seatback cushion). For instance, the cushions may conform or substantially conform to at least a portion of a corresponding surface. In addition, at least a portion of the cushion (e.g., including, but not limited to, a front edge or leading portion of the cushion) may wrap around or otherwise enclose a portion of other components of the passenger seat 104.

By way of another example, the additional components may include, but are not limited to, dress covers (e.g., a seat pan dress cover and/or a seatback dress cover), seatbelts, or the like. The cushions and/or the dress covers may be attached to one or more other components of the passenger seat 104 via hook and loop fastener assemblies (e.g., Velcro^{®}) or other fastener assemblies (e.g., attachment clips, or the like).

In some embodiments, the one or more passenger seats 104 are coupled to one or more frames or frame elements such as structural beams 116. For example, the one or more seat pans 108 and the one or more seatbacks 110 may be coupled directly or indirectly to a set of structural beams 116, and select passenger seat 104 components may be shared with other passenger seats 104. For instance, some frame elements may be shared between adjacent passenger seats 104 while other frame elements may be common across an entire row of passenger seats 104. In addition, the one or more passenger seats 104 may be part of a row 106 with two passenger seats 104, three passenger seats 104, or four or more passenger seats 104.

Where there are multiple structural beams 116, the multiple structural beams 116 may be positioned in a parallel (or substantially parallel) spaced-apart relationship. In addition, where there are multiple structural beams 116, a particular structural beam 116 may correspond to a respective "forward / fore" or "aft / rear" structural beam 116. It is noted herein, however, the relationship between the multiple structural beams 116 is not limited to parallel (or substantially parallel), and the arrangement of the multiple structural beams 116 is not limited to respective "forward / fore" and "aft / rear" designations. Therefore, the above description should not be interpreted as a limitation on the present disclosure but merely an illustration.

In some embodiments, the one or more passenger seats 104 are coupled to the one or more structural beams 116 via one or more spreaders 118. For example, the one or more seat pans 108 and the one or more seatbacks 110 may be coupled directly or indirectly to the one or more structural beams 116 via one or more spreaders 118. Where there are multiple spreaders 118, the multiple spreaders 118 may be positioned in a parallel (or substantially parallel) spaced-apart relationship. In addition, where there are multiple spreaders 118, a particular spreader 118 may correspond to a respective "inboard" or "outboard" spreader 118. The one or more spreaders 118 may be transverse (e.g., perpendicular (or substantially perpendicular)) to the one or more structural beams 116. It is noted herein, however, the relationship between the multiple spreaders 118 is not limited to parallel (or substantially parallel), the arrangement of the multiple spreaders 118 is not limited to respective "inboard" and "outboard" designations, and the relationship between the one or more spreaders 118 and the one or more structural beams 116 is not limited to transverse (e.g., perpendicular (or substantially perpendicular)). Therefore, the above description should not be interpreted as a limitation on the present disclosure but merely an illustration. It is noted herein the fixed armrests 114 and/or the pivoting armrests 114 may be coupled to the one or more spreaders 118.

The one or more spreaders 118 may be coupled to the one or more structural beams 116 via one or more brackets. For example, the one or more brackets may be fabricated on the one or more spreaders 118. By way of another example, the one or more brackets may be coupled to the one or more spreaders 118. Although embodiments of the present disclosure illustrate the use of the one or more brackets to couple the one or more spreaders 118 to the one or more structural beams 116, it is noted herein the one or more spreaders 118 may be coupled to the one or more structural beams 116 via one or more interference couplers. For example, a particular interference coupler may be capable of a select amount of deflection, allowing the interference coupler to snap or otherwise latch onto a corresponding structural beam 116. It is noted herein the one or more interference couplers may be hemispherical or hyper-hemispherical, to allow for the retaining of the one or more spreaders 118 on the one or more structural beams 116. In addition, it is noted herein a diameter of the one or more interference couplers may be equal to or less than a diameter of the one or more structural beams 116, to allow for the retaining of the one or more spreaders 118 on the one or more structural beams 116. In addition, it is noted herein the one or more spreaders 118 may be coupled to the one or more structural beams 116 via one or more non-interference couplers. Further, it is noted herein the one or more spreaders 118 may be coupled to the one or more structural beams 116 via one or more fasteners. Further, it is noted herein the one or more spreaders 118 may be coupled to the one or more structural beams 116 via a combination of the one or more brackets, the one or more interference couplers, the one or more non-interference couplers, and/or the one or more fasteners. Therefore, the above description should not be interpreted as a limitation on the scope of the present disclosure but merely an illustration.

In some embodiments, the one or more structural beams 116 and/or the one or more spreaders 118 are coupled to one or more legs 120. For example, the one or more legs 120 may attach to the one or more structural beams 116 and secure to embedded tracks 122 located in a floor 124 of the aircraft cabin 100 via fittings or track fasteners 126.

As described above, the seatback 110 may be coupled to the one or more spreaders 118 or may be coupled to the seat pan 108. In this regard, the seatback 110 is directly or indirectly secured to the embedded tracks 122 via the track fasteners 126, and the seat pan 108 and the seatback 110 may be considered a single set of joined components of a passenger seat 104 as illustrated in FIGS. 1A-1C.

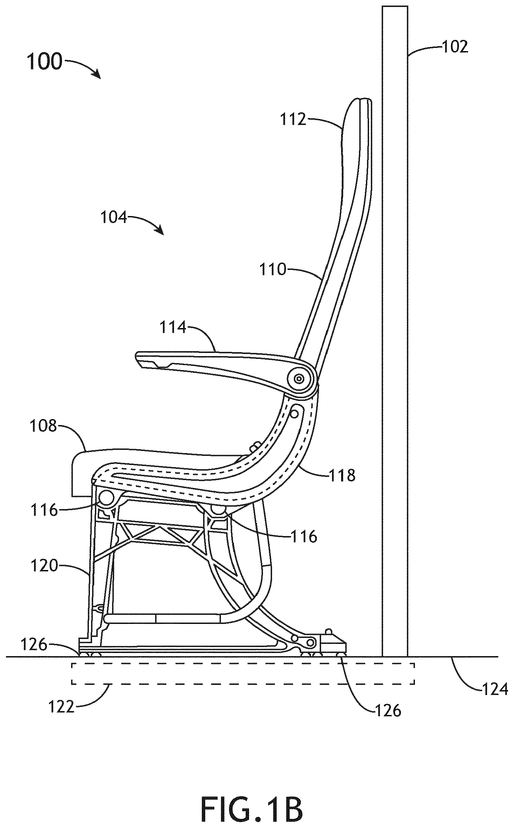

As illustrated in FIGS. 1A and 1B, the row of the one or more passenger seats 104 may be positioned within the aircraft cabin 100 so as to leave a gap between the row of the one or more passenger seats 104 and the aircraft interior structure 102. In an effort to further balance the competing needs for space within the aircraft cabin 100, it would be beneficial to adjust the row 106 of one or more passenger seats 104 rearward. For example, adjusting the row of the one or more passenger seats 104 rearward to add customer value and/or potentially increase airline revenue in the form of additional seating, to increase galley space or storage space, or the like. Adjusting the row 106 of one or more passenger seats 104 rearward, however, is limited by the positioning of the aircraft interior structure 102.

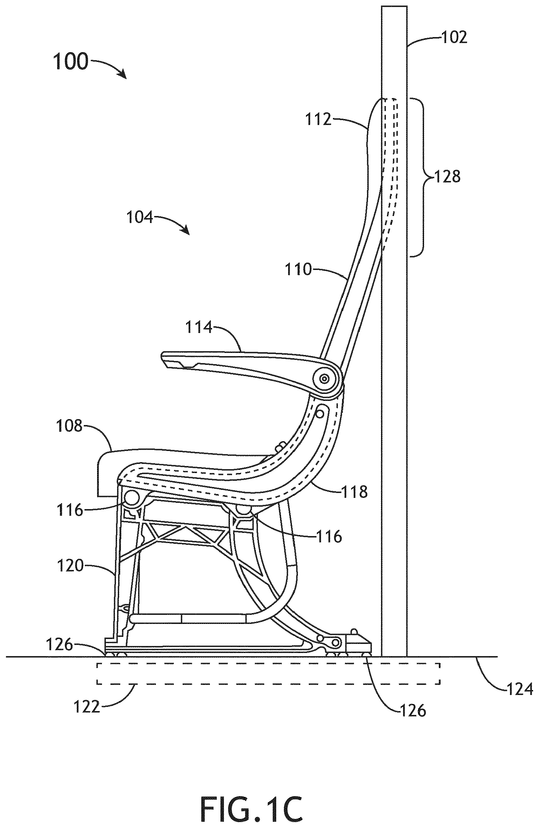

As illustrated in FIG. 1C, the row of the one or more passenger seats 104 cannot be moved closer to the aircraft interior structure 102 without interference. For example, moving passenger seats 104 rearward would cause a portion 128 of the one or more passenger seats 104 to interfere with the aircraft interior structure 102. For instance, a portion 128 of the one or more seatback 110 and/or the one or more head rests 112 would need to be at least partially embedded within the aircraft interior structure 102 if the one or more passenger seats 104 were moved rearward. In this regard, existing high-density aircraft cabin configurations are limited at least in part by the limitations presented by the proximity of passenger seats 104 to an aircraft interior structure 102.

In addition to issues of interference, the balancing of interests for space must take into consideration the aircraft cabin components being required to meet aircraft guidelines and/or standards when installed within the aircraft cabin. For example, the passenger seat may be configured in accordance with aviation guidelines and/or standards put forth by, but not limited to, the Federal Aviation Administration (FAA), the European Aviation Safety Agency (EASA), or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; the United States Code of Federal Regulations (CFR) or other codified text; or the like. For instance, the passenger seat may be configured in accordance with aviation guidelines and/or standards put forth in at least 14 C.F.R. §§ 25.561 and 25.562, related to Emergency Landing Dynamic Conditions for Transport Category Airplanes, as codified on December 24, 1964 and amended on April 8, 1970, May 17, 1988, and July 29, 1997.

Embodiments of the present disclosure are directed to passenger seating positioned proximate to an aircraft interior structure. Embodiments of the present disclosure are also directed to the passenger seating being constructed from multiple, separate assemblies coupled to either the floor of an aircraft cabin or an aircraft interior structure installed in the aircraft cabin.

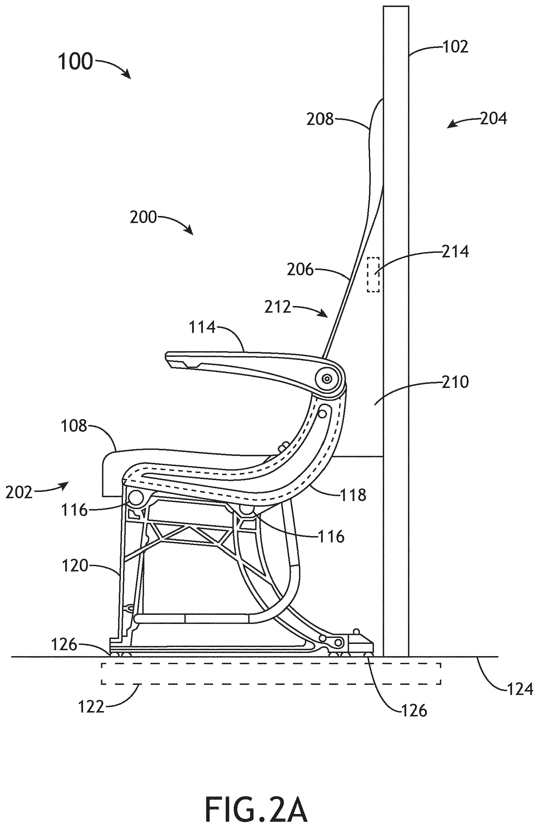

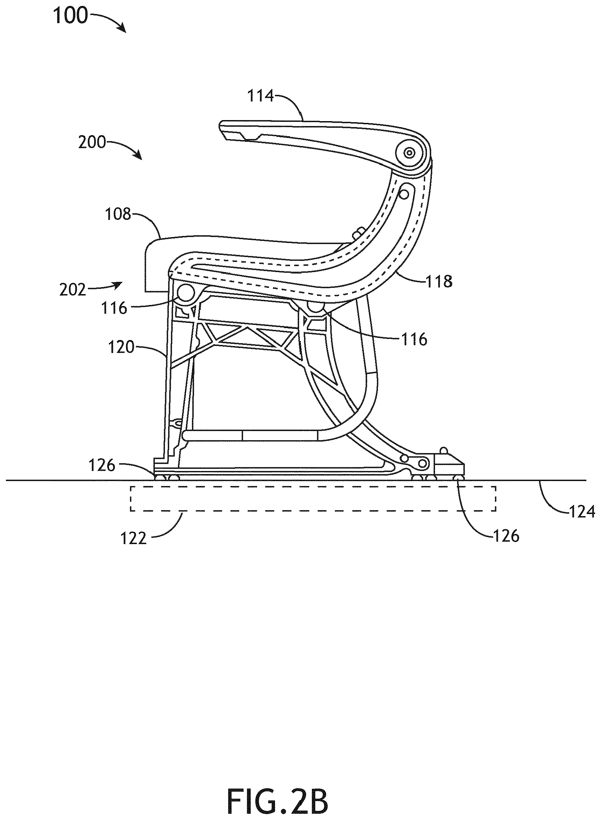

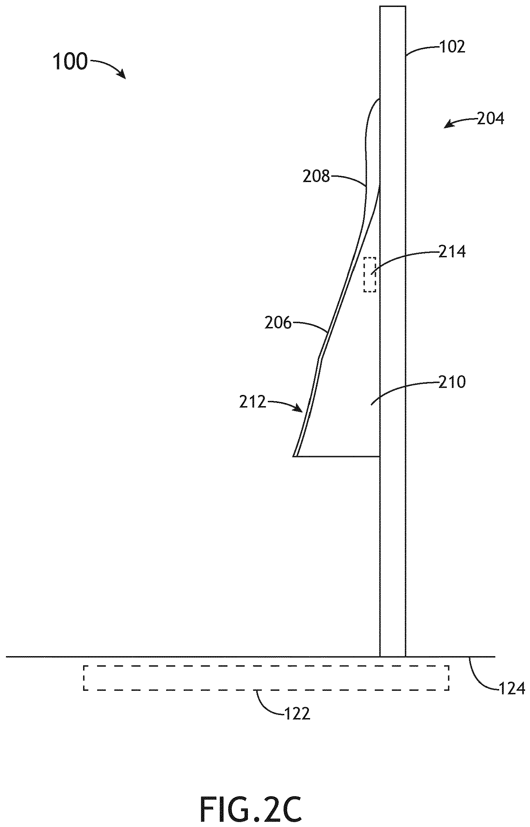

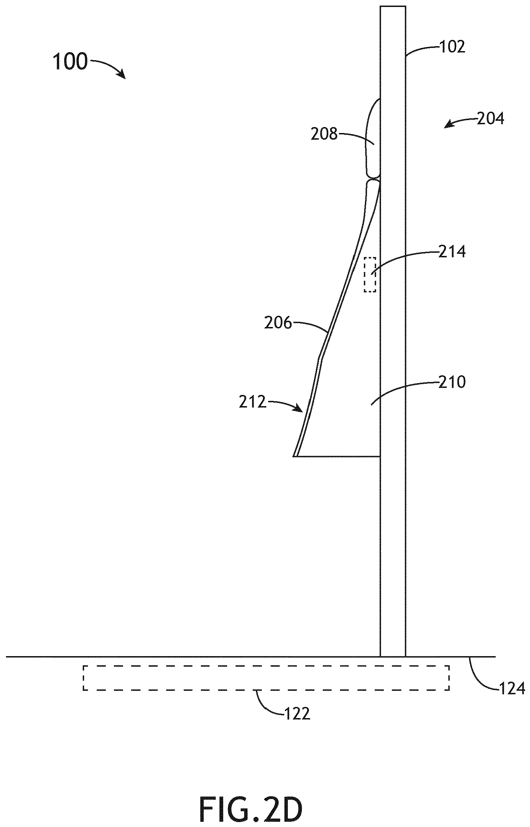

FIGS. 2A-2D in general illustrate one or more passenger seats 200 positioned proximate to the aircraft interior structure 102, in accordance with one or more embodiments of the present disclosure.

In some embodiments, the one or more passenger seats 200 include one or more seat base assemblies 202. The one or more seat base assemblies 202 may include one or more seat pans 108. The one or more seat pans 108 may be coupled to the one or more structural beams 116 via the one or more spreaders 118, where the one or more structural beams 116 are attached to the embedded tracks 122 in the floor 124 via the one or more legs 120, as described throughout the present disclosure. In this regard, the one or more seat base assemblies 202 may be considered as being attached to the floor 124 of the aircraft cabin 100, either via some or all of the one or more structural beams 116, the one or more spreaders 118, and/or the one or more legs 120 depending on the arrangement and/or use of the components within the one or more passenger seats 200. It is noted herein some or all of the one or more armrests 114, the one or more structural beams 116, the one or more spreaders 118, and/or the one or more legs 120 may be considered components of the one or more seat base assemblies 202, for purposes of the present disclosure.

In some embodiments, the one or more passenger seats 200 include one or more seatback assemblies 204.

The one or more seatback assemblies 204 may include a seatback 206. For example, the seatback 206 may include a cushion and/or a dress cover. It is noted herein the seatback 206 may be airline-specific and be provided by the manufacturer or a particular vendor. For example, a surface of the seatback 206 may be contoured by the vendor to match with other passenger seats installed within the aircraft cabin 100 not proximate to the aircraft interior structure 102. For instance, the contouring may conform a surface of the seatback 206 to or for a passenger profile to provide a select level of comfort to the passenger. For example, the passenger profile may be determined through vendor or manufacturer testing, defined via manufacturer design, defined via anthropometric reference data (e.g., conforming to a 95th percentile, or another percentile), defined via customer request, or the like.

The seatback 206 may include a head rest 208. For example, the head rest 208 may be couplable to the seatback 206. By way of another example, the head rest 208 may be integrated into the contouring of the seatback 206.

The one or more seatback assemblies 204 may include a support structure 210. For example, the support structure 210 may be a lightweight, rigid structure. For instance, the support structure 210 may be a hollow, rigid structure constructed from bars, tubes, sheets, or other materials combinable into a rigid structure without introducing excess weight into the aircraft seat 200 build. In addition, the support structure 210 may be fabricated as a single component (e.g., solid and rigid, or hollow and rigid) which does not introduce excess weight into the aircraft seat 200 build. By way of another example, the support structure 210 may be fabricated from foam or another lightweight solid block material. The support structure 210 may be of a shape to generally orientate the seatback 206 relative to the seat base assembly 202 to provide a passenger with a correct back surface when seated in the aircraft seat 200. It is noted herein the support structure 210 may be generic and provided by the aircraft interior structure 102 manufacturer or a vendor. For example, the support structure 210 may be common to all aircraft cabins 100 designs in which the passenger seat 200 may be installed.

The seatback 206 may be couplable to the support structure 210 via a quick-release assembly such as one or more mounting assemblies 212, where the quick-release assembly is configured to allow for the installation of the one or more seatbacks 206 on and removal of the seatback 206 from the support structure 210. For example, the one or more mounting assemblies 212 may include an interlocking assembly (e.g., a tab-and-groove assembly, a hook and loop fastener assembly, a snap assembly, a plate-and-bracket assembly, or the like), where at least one component of the interlocking assembly is positioned on or within the seatback 206 and at least one component of the interlocking assembly is coupled to the support structure 210. The seatback 206 may be coupled to the support structure 210 via an adhesive, one or more fabrication processes (e.g., sewing processes, or the like), fasteners, or the like.

Although embodiments of the present disclosure illustrate the seatback 206 and the support structure 210 being separate components of the one or more seatback assemblies 204, it is noted herein the seatback 206 and the support structure 210 may be fabricated as a single component. Therefore, the above description should not be interpreted as a limitation on the present disclosure but merely an illustration.

The one or more seatback assemblies 204 may be couplable via the support structure 210 to the aircraft interior structure 102, which is attached to the embedded tracks 122 in the floor 124. For example, the one or more seatback assemblies 204 may be couplable via the support structure 210 to the aircraft interior structure 102 via a quick-release assembly such as one or more mounting assemblies 214, where the quick-release assembly is configured to allow for the installation of the one or more seatback assemblies 204 on and removal of the one or more seatback assemblies 204 from the aircraft interior structure 102. For instance, the one or more mounting assemblies 214 may include an interlocking assembly (e.g., a tab-and-groove assembly, a hook and loop fastener assembly, a snap assembly, a plate-and-bracket assembly, or the like), where at least one component of the interlocking assembly is positioned on or within a surface of the aircraft interior structure 102 and at least one component of the interlocking assembly is coupled to a support structure 210. The one or more seatback assemblies 204 may be couplable via the support structure 210 to the aircraft interior structure 102. For example, the one or more seatback assemblies 204 may be coupled via the support structure 210 to the aircraft interior structure 102 via an adhesive, one or more fabrication processes (e.g., welding processes, or the like), fasteners, or the like. In this regard, the one or more seatback assemblies 204 may be considered as being attached to the floor 124 of the aircraft cabin 100 via the aircraft interior structure 102.

Where the aircraft seat 200 includes one or more spreaders 118 (and potentially one or more armrests 114), the one or more seatback assemblies 204 may be separately coupled to the aircraft interior structure 102 and dimensioned relative to a corresponding seat base assembly 202. For example, the one or more seatback assemblies 204 may be dimensioned with a width similar to a width of the corresponding seat base assembly 202, where the width is less than a width between adjacent spreaders 118. By way of another example, where the armrests 114 pivot, the one or more seatback assemblies 204 may be spaced and dimensioned with a width to accommodate the motion of the armrests 114. It is noted herein, however, the one or more seatback assemblies 204 may be a single, continuous couch back design, such that the width of the one or more seatback assemblies 204 may be greater than a width of the corresponding seat base assembly 202 and the width between adjacent spreaders 118.

In this regard, the one or more seatback assemblies 204 are separate from the one or more seat base assemblies 202 and thus are not directly coupled, as the one or more seatback assemblies 204 are only coupled to the aircraft interior structure 102. The attaching of the one or more seatback assemblies 204 to the aircraft interior structure 102 may allow for a gain of between 2 and 5 inches (5.08 - 12.7 cm) of cabin space (e.g., the aircraft seat 200 may be moved aft-ward between 2 and 5 inches (5.08 - 12.7 cm)), with the issue of interference observed with the passenger seat 104 as illustrated in FIG. 1C being reduced. As the one or more seatback assemblies 204 are the only components coupled to the embedded tracks 122 via the one or more legs 120, it is contemplated the one or more seatback assemblies 204 may be reduced in weight and package space (e.g., reduced-strength track fasteners 126 such as 2-lug instead of 3-lug, reduced leg 120 pitch, or the like), which may be utilized to enhance space and/or reduce weight and cost.

It is noted herein, however, the one or more seat base assemblies 202 by themselves may not be able to meet requirements set forth through Technical Standard Orders (TSOs) (e.g., by not providing a method to meet 1.5g aft load requirements per 14 C.F.R § 25.561, due to the one or more seat base assemblies 202 not having an attached seatback). However, it is contemplated the combination of the one or more seatback assemblies 204 and the aircraft interior structure 102, where the aircraft interior structure 102 is attached to the embedded tracks 122 within the floor 124, could be approved with a Supplemental Type Certificate (STC) as a valid installation within the aircraft cabin 100. For example, the combination of the one or more seatback assemblies 204 and the aircraft interior structure 102 may provide enough support that use with the one or more seat base assemblies 202 would allow the aircraft seat 200 to meet aviation guidelines and/or standards put forth in at least 14 C.F.R. §§ 25.561 and 25.562, related to Emergency Landing Dynamic Conditions for Transport Category Airplanes, as codified on December 24, 1964 and amended on April 8, 1970, May 17, 1988, and July 29, 1997.

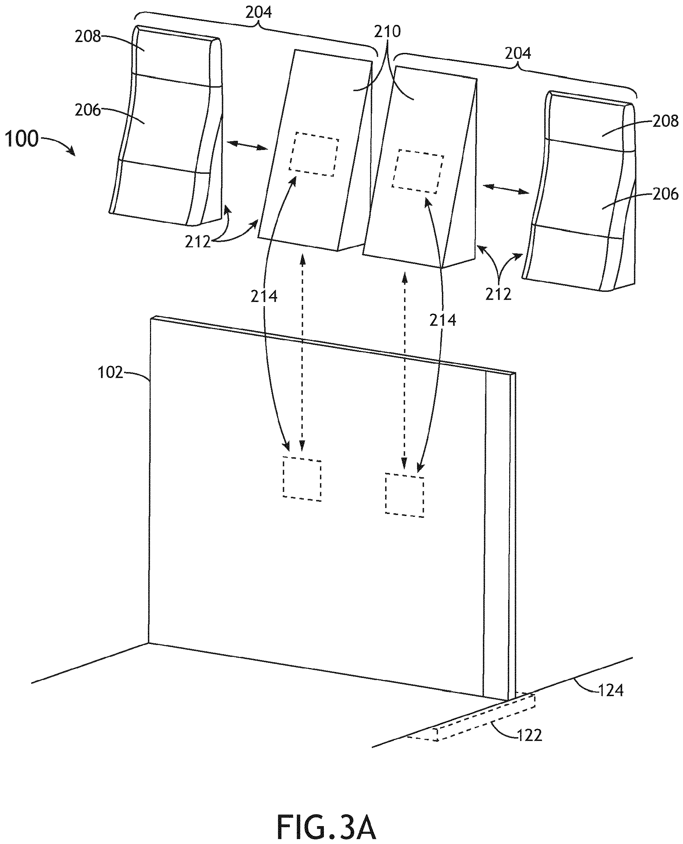

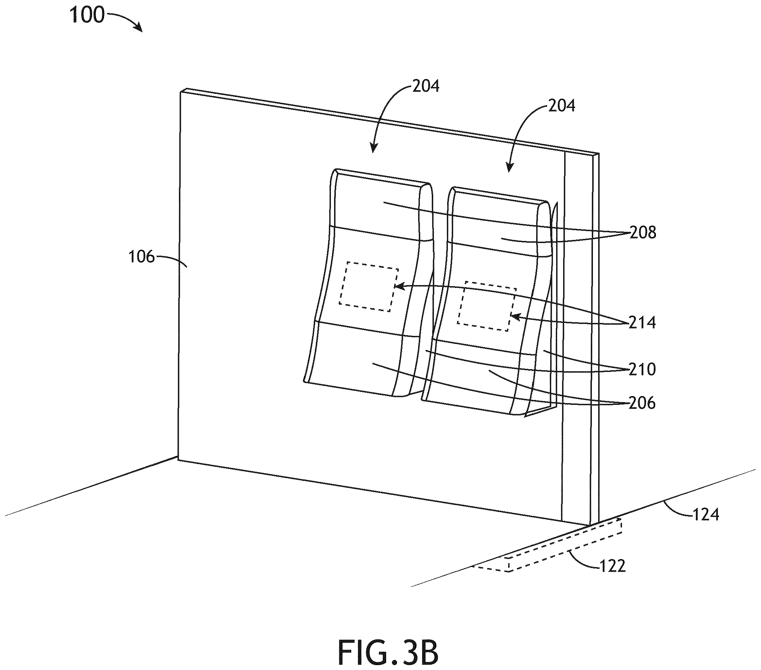

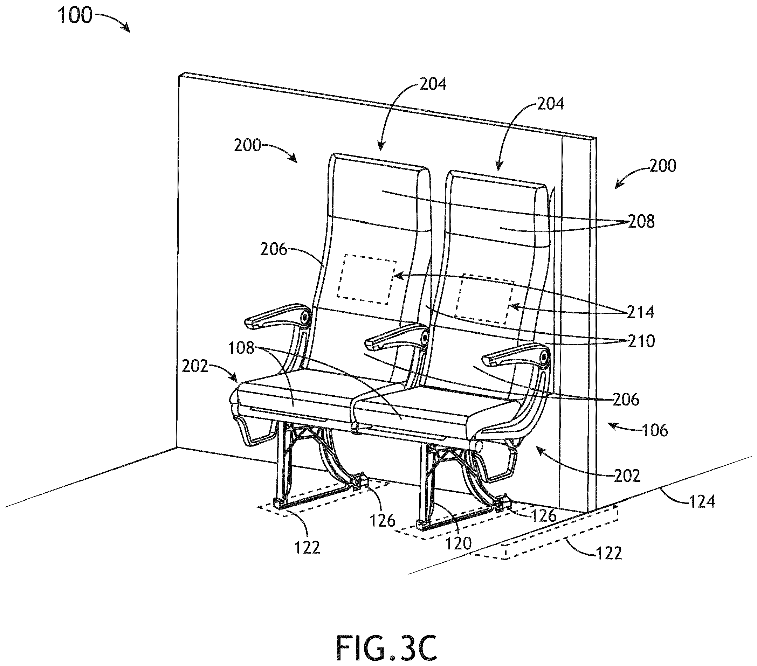

FIGS. 3A-3C illustrate a method of installation or removal of the passenger seat 200 into the aircraft cabin 100, in accordance with one or more embodiments of the present disclosure. It is noted herein the passenger seat 200 and/or the components of the passenger seat 200 as mentioned in the following steps may be understood as illustrated in embodiments throughout the present disclosure.

In a step, the one or more seatback assemblies 204 are constructed. In some embodiments, the one or more seatbacks 206 are coupled to a corresponding support structure 210.

In a step, the one or more seatback assemblies 204 are coupled to the aircraft interior structure 102. In some embodiments, the one or more seatback assemblies 204 are coupled to the aircraft interior structure 102 via one or more of a quick-release mounting assembly 214, an adhesive, one or more fabrication processes, fasteners, or the like.

In a step, the one or more seat base assemblies 202 are coupled to the floor 124 of the aircraft cabin 100 after the one or more seatback assemblies 204 are coupled to the aircraft interior structure 102. In some embodiments, the one or more seat base assemblies 202 are coupled to the floor 124 of the aircraft cabin 100 in front of the aircraft interior structure 102 which is similarly coupled to the floor 124. The combination of the one or more seat base assemblies 202 and the one or more seatback assemblies 204 form one or more passenger seats 200. For example, the one or more seatback assemblies 204 may abut against the one or more seat base assemblies 202 without being coupled (e.g., to prevent a formation of a gap). By way of another example, the one or more seatback assemblies 204 may be spaced a select distance behind and/or above the one or more seat base assemblies 202. For instance, the one or more seatback assemblies 204 may be positioned over a portion of the one or more seat base assemblies 202, such that a portion of the seat pan 108 is positioned underneath a corresponding seatback 206.

It is noted herein removal of the aircraft seat 200 from the aircraft cabin 100 and/or removal of components of the aircraft seat 200 may include reversing one or more of the previous steps.

In addition, it is noted herein the one or more seatback assemblies 204 may be removed and/or replaced without needing to uncouple and remove (and subsequently replace) the one or more seat base assemblies 202, such that the one or more seatback assemblies 204 are swappable.

Further, it is noted herein the directions of installation or removal as provided in FIGS. 3A-3C are not intended to be limiting. For example, the directions or motions required during installation or removal when coupling the one or more seatbacks 206 to the one or more support structures 210 and/or the one or more seatback assemblies 204 to the aircraft interior structures 102 may be dependent on the type of mounting assembly 214 or other coupling mechanism employed in the construction of the aircraft seat 200. Therefore, the above description should not be interpreted as a limitation on the scope of the present disclosure but merely an illustration.

Further, it is noted herein the method or process of installation or removal of the aircraft seat 200 into the aircraft cabin 100 is not limited to the steps and/or sub-steps provided. The method or process of installation or removal of the aircraft seat 200 into the aircraft cabin 100 may include more or fewer steps and/or sub-steps. The method or process of installation or removal of the aircraft seat 200 into the aircraft cabin 100 may perform the steps and/or sub-steps simultaneously. The method or process of installation or removal of the aircraft seat 200 into the aircraft cabin 100 may perform the steps and/or sub-steps sequentially, including in the order provided or an order other than provided. Therefore, the above description should not be interpreted as a limitation on the scope of the present disclosure but merely an illustration.

Advantages of the present disclosure are directed to passenger seating positioned proximate to an aircraft interior structure. Advantages of the present disclosure are also directed to the passenger seating being constructed from multiple, separate assemblies coupled to either the floor of an aircraft cabin or an aircraft interior structure installed in the aircraft cabin.

Although the disclosure has been described with reference to the embodiments illustrated in the attached drawing figures, substitutions made herein without departing from the scope of the claims. Components illustrated and described herein are merely examples of a system/device and components that may be used to implement embodiments of the present disclosure and may be replaced with other devices and components without departing from the scope of the claims. Furthermore, any dimensions, degrees, and/or numerical ranges provided herein are to be understood as non-limiting examples unless otherwise specified in the claims.

## Claims

1. Passenger seating positioned proximate to an aircraft interior structure, the passenger seating comprising:
at least one seat base assembly (202), the at least one seat base assembly including a seat pan (108), the at least one seat base assembly being attached to a floor of an aircraft cabin; and
at least one seatback assembly (204), the at least one seatback assembly comprising:
a seatback (206), the seatback including a surface contoured to a passenger profile; and
a support structure (210), the seatback being couplable to the support structure, the support structure being couplable to the aircraft interior structure attached to the floor of the aircraft cabin, the support structure being couplable to the aircraft interior structure via at least one quick-release mounting assembly (214), a first component of the at least one quick-release mounting assembly being coupled to the support structure and a second component of the at least one quick-release mounting assembly being coupled to the aircraft interior structure,
wherein the at least one seatback assembly is not directly coupled to the at least one seat base assembly.

2. The passenger seating of Claim 1, the seatback being couplable to the support structure via at least a second quick-release mounting assembly, a first component of the at least a second quick-release mounting assembly being coupled to the seatback and a second component of the at least a second quick-release mounting assembly being coupled to the support structure.

3. The passenger seating of Claim 1 or 2, the support structure being a hollow rigid structure fabricated from one or more components.

4. The passenger seating of Claim 1 or 2, the support structure being fabricated from a solid block material.

5. The passenger seating of any preceding Claim, the at least one seatback assembly including a head rest integrated into a contoured profile of the seatback.

6. The passenger seating of any of Claims 1 to 4, the at least one seatback assembly including a head rest couplable to the seatback.

7. The passenger seating of any preceding Claim, further comprising:
at least two spreaders (118), the seat pan being coupled to the at least two spreaders;
at least one structural beam (116), the at least two spreaders being coupled to the at least one structural beam; and
at least two legs (120), the at least one structural beam being coupled to the at least two legs, the at least two legs being attached to the floor of the aircraft cabin.

8. The passenger seating of Claim 7, the at least one seat base assembly and the at least one seatback assembly each being dimensioned with a width less than a width between the at least two spreaders.

9. The passenger seating of Claim 8, the at least one seat base assembly including at least two seat base assemblies, the at least one quick-release mounting assembly including at least two quick-release mounting assemblies, the at least two seat base assemblies being separately coupled to the aircraft interior structure via a respective quick-release mounting assembly of the at least two quick-release mounting assemblies, the at least one seatback assembly including at least two seatback assemblies, the at least two spreaders including at least three spreaders.

10. The passenger seating of Claim 9, a first seat base assembly of the at least two seat base assemblies and a first seatback assembly of the at least two seatback assemblies each being dimensioned with a width less than a width between a first spreader and a second spreader adjacent to the first spreader of the at least three spreaders.

11. The passenger seating of Claim 10, a second seat base assembly of the at least two seat base assemblies and a second seatback assembly of the at least two seatback assemblies each being dimensioned with a width less than a width between the second spreader and a third spreader adjacent to the second spreader of the at least three spreaders.

12. The passenger seating of any of Claims 7 to 11, further comprising:
at least two armrests (114), an armrest of the at least two armrests each being coupled to each of the at least two spreaders, the at least one seatback assembly being dimensioned with a width less than a width between the at least two armrests.

13. The passenger seating of any preceding Claim, the at least one seatback assembly being coupled to the aircraft interior structure prior to the at least one seat base assembly being attached to the floor of the aircraft cabin during installation of the passenger seating into the aircraft cabin.

14. The passenger seating of any of Claims 1 to 12, the at least one seatback assembly being swappable with at least a second seatback assembly without uncoupling the at least one seat base assembly from the floor of the aircraft cabin.

15. A system installable within an aircraft cabin, comprising:
an aircraft interior structure (102); and
passenger seating (104) as claimed in any preceding claim positioned proximate to the aircraft interior structure.
